# EUROPEAN PATENT SPECIFICATION

(11) **EP 2 500 975 B1**
(45) Date of publication and mention of the grant of the patent: **11.01.2017**
(21) Application number: 10830039.3
(22) Date of filing: 15.11.2010
(51) Int. Cl.: H01M 10/0565, H01M 10/052, H01M 10/0567, H01G 11/56

(54) **GEL ELECTROLYTE FOR LITHIUM ION SECONDARY BATTERY AND LITHIUM ION SECONDARY BATTERY COMPRISING SAME**
GELELEKTROLYT FÜR EINE LITHIUMIONEN-SEKUNDÄRBATTERIE UND LITHIUMIONEN-SEKUNDÄRBATTERIE DAMIT
ELECTROLYTE SOUS FORME DE GEL POUR BATTERIE SECONDAIRE AU LITHIUM-ION, ET BATTERIE SECONDAIRE AU LITHIUM-ION COMPRENANT CET ÉLECTROLYTE

(30) Priority: 13.11.2009 JP 2009260039
(43) Date of publication of application: 19.09.2012
(73) Proprietor: NEC Energy Devices, Ltd., Chuo-ku Sagamihara-shi Kanagawa 252-5298 (JP)
(72) Inventor: KONO, Yasutaka, Sagamihara-shi Kanagawa 252-5298 (JP); KANEKO, Shinako, Sagamihara-shi Kanagawa 252-5298 (JP); HASIZUME, Yoko, Sagamihara-shi Kanagawa 252-5298 (JP); ISHIKAWA, Hitoshi, Sagamihara-shi Kanagawa 252-5298 (JP)
(74) Representative: Vossius & Partner Patentanwälte Rechtsanwälte mbB
(86) International application number: PCT/JP2010/070271
(87) International publication number: WO 2011/059083

(56) References cited:
- JP-A- 2002 110 245
- JP-A- 2005 190 869
- JP-A- 2006 024 380
- JP-A- 2007 328 992
- JP-A- 2008 041 413
- DATABASE WPI Week 200821 Thomson Scientific, London, GB; AN 2008-C89782 XP002699397, -& JP 2008 041413 A (BRIDGESTONE CORP) 21 February 2008 (2008-02-21)
- DATABASE WPI Week 200163 Thomson Scientific, London, GB; AN 2001-565090 XP002699398, -& WO 01/47055 A1 (SUNSTAR ENG INC) 28 June 2001 (2001-06-28)
- DATABASE WPI Week 200559 Thomson Scientific, London, GB; AN 2005-574221 XP002699399, -& JP 2005 190869 A (BRIDGESTONE CORP) 14 July 2005 (2005-07-14)

## Description

### Technical Field

The present exemplary embodiment relates to a gel electrolyte for a lithium ion secondary battery, and a lithium ion secondary battery having the same.

### Background Art

Since lithium ion or lithium secondary batteries can achieve high energy densities, these attract attention as power sources for cell phones and laptop computers, and also as large power sources for electricity storage and power sources for automobiles.

Although lithium ion or lithium secondary batteries can achieve high energy densities, up-sizing makes the energy density gigantic, and higher safety is demanded. For example, in large power sources for electricity storage and power sources for automobiles, especially high safety is demanded, and as safety measures, there are applied the structural design of cells, packages and the like, protection circuits, electrode materials, additives having an overcharge protection function, the reinforcement of shutdown function of separators, and the like.

Lithium ion secondary batteries use aprotic solvents such as cyclic carbonates and chain carbonates as electrolyte solvents; and these carbonates are characterized by having a low flash point and being combustible though having a high dielectric constant and a high ionic conductivity of lithium ion.

One means of further enhancing the safety of lithium ion secondary batteries is making electrolyte solutions flame-retardant. As a technique for making electrolyte solutions flame-retardant, methods of adding a phosphazene compound as a flame retardant are disclosed.

For example, a nonaqueous electrolyte battery of Patent Literature 1 uses a solution in which a lithium salt is dissolved in a phosphazene derivative as the electrolyte, or a solution in which a lithium salt is dissolved in a solvent in which an aprotic organic solvent is further added in a phosphazene derivative. It is disclosed that thereby there arises no danger such as burst and ignition even in abnormal cases such as short circuits and that the excellent battery performance can be achieved.

A nonaqueous electrolyte battery of Patent Literature 2 uses a solution in which a lithium salt is dissolved in a chain-type phosphazene derivative as the electrolyte, or a solution in which a lithium salt is dissolved in a solvent in which an aprotic organic solvent is further added in a phosphazene derivative. It is disclosed that thereby there arises no danger such as burst and ignition even in abnormal cases such as short circuits and that the excellent battery characteristics can be achieved.

Patent Literature 3 describes a nonaqueous-type electrolyte solution secondary battery which has a positive electrode, a negative electrode, and a nonaqueous-type electrolyte solution containing a supporting salt, an organic solvent and a phosphazene derivative, wherein the potential window of the phosphazene derivative is in the range of a lower-limit value of +0.5 V or lower and an upper-limit value of +4.5 V or higher, and the potential window of the organic solvent is in a broader range than that of the phosphazene derivative.

Patent Literature 4 describes a nonaqueous-type electrolyte solution secondary battery which has a positive electrode, a negative electrode, and a nonaqueous-type electrolyte solution containing a supporting salt and a phosphazene derivative whose lithium salt solution (0.5 mol/l) has a conductivity of at least 2.0 mS/cm.

A technology is known which uses, as an additive, a material reductively degraded at a higher potential than those of carbonates used as electrolyte solution solvents and forming an SEI (Solid Electrolyte Interface) being a protection membrane having a high lithium ion permeability. It is known that since the SEI has large effects on the charge/discharge efficiency, the cycle characteristics and the safety, control of the SEI at a negative electrode is essential, and the irreversible capacity of carbon materials and oxide materials can be reduced by the SEI.

Patent Literature 5 describes provision of an excellent nonaqueous-type electrolyte solution containing a lithium salt and a nonaqueous solvent, which can secure the safety and reliability in abnormal heating and the like of a battery and can also provide good battery performance such as cycle characteristics by further incorporation of a cyclic carbonate ester having a carbon-carbon unsaturated bond in the molecule and 1% by mass or more and 25% by mass or less of a phosphazene derivative based on the nonaqueous-type electrolyte solution.

In Patent Literature 6, a nonaqueous-type electrolyte solution for a battery contains a nonaqueous solution containing a cyclic phosphazene compound and a difluorophosphate ester compound, and at least one cyclic sulfur compound selected from the group consisting of 1,3-propanesultone, 1,3-butanesultone, 1,4-butanesultone and 1,3,2-dioxathiolane-2,2-dioxide, and a supporting salt. It is disclosed that the excellent battery performance and high safety even in a high-temperature environment are thereby imparted to the battery.

### Citation List

### Patent Literature

Patent Literature 1: JP6-13108A
Patent Literature 2: JP11-144757A
Patent Literature 3: JP2001-217005A
Patent Literature 4: JP2001-217007A
Patent Literature 5: JP2006-24380A
Patent Literature 6: JP2008-41413A

### Summary of Invention

### Technical Problem

However, in Patent Literatures 1 to 4 and 6, since the phosphazene compounds are gradually reductively degraded on negative electrodes during long-term use, the capacity retention rates of the batteries greatly decrease in some cases.

In Patent Literature 5, although addition of vinylene carbonate capable of forming an SEI suppresses the reductive degradation of the phosphazene compound, addition of the vinylene carbonate in an enough amount to suppress the reductive degradation of the phosphazene compound over a long period causes an increase in resistance, greatly decreasing charge/discharge characteristics of the battery in some cases.

Further in Patent Literature 6, in the case where the phosphazene compound and the difluorophosphate ester are degraded over a long period, a decrease in the presence rate of a flame retardant in the electrolyte solution reduces, in some cases, the safety after long-term usage. That is, in the case where a flame retardant to be reductively degraded is added, an amount of the additive corresponding to the amount of the flame retardant added is needed. Therefore, the resistance of the battery greatly increases, and the capacity and the rate characteristics sharply decrease in some cases. Therefore, there is a need for the selection of an additive capable of forming a best SEI to stabilize a phosphazene compound even at high temperatures for a long period, in an amount added such that battery characteristics are not reduced.

Since any of Patent Literatures 1 to 6 uses an electrolyte solution, a problem for concern is solution leakage. The present exemplary embodiment has been made in consideration of the above-mentioned situations, and an object thereof is to provide a gel electrolyte for a lithium ion secondary battery having high safety and good life characteristics, and a lithium ion secondary battery having the gel electrolyte.

### Solution to Problem

The gel electrolyte for a lithium ion secondary battery according to claim 1 contains a lithium salt, a copolymer of a monomer represented by the following formula (1) or (2) and a monomer represented by the following formula (4), and a compound having a phosphazene structure represented by the following formula (5), and contains, as an additive, at least one compound selected from a cyclic disulfonate ester represented by the following formula (6), a chain disulfonate ester represented by the following formula (7). Additionally, it may comprise a sultone compound represented by the following formula (8). 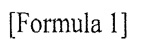 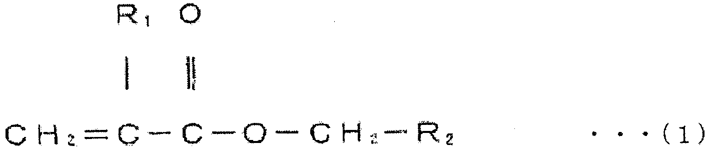 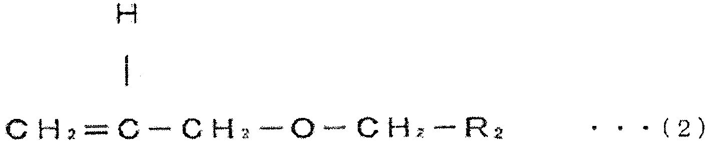 wherein in the formula (1), R₁ denotes H or CH₃; and in the formulas (1) and (2), R₂ denotes one of substituents represented by the following formula (3). 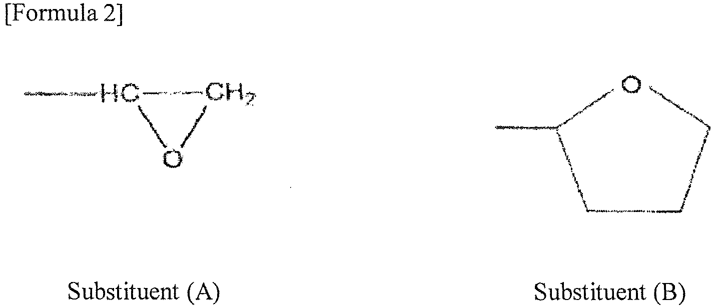 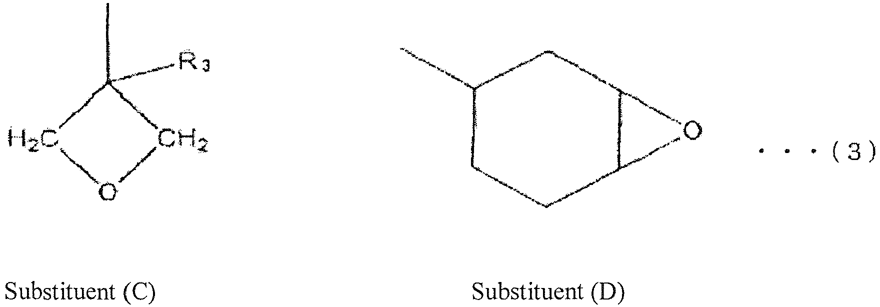 wherein in the formula (3), R₃ denotes an alkyl group having 1 to 6 carbon atoms. 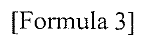 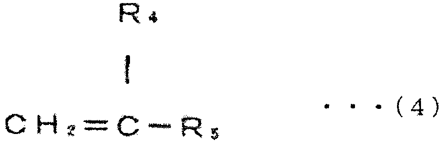 wherein in the formula (4), R₄ denotes H or CH₃; R₅ denotes -COOCH₃, -COOC₂H₅, -COOC₃H₇, -COOC₄H₉, -COOCH₂CH(CH₃)₂, -COO(CH₂CH₂O)ₘCH₃, -COO(CH₂CH₂O)ₘC₄H₉, - COO(CH₂CH₂CH₂O)ₘCH₃, -COO(CH₂CH(CH₃)O)ₘCH₃, -COO(CH₂CH(CH₃)O)ₘC₂H₅, - OCOCH₃, -OCOC₂H₅, or -CH₂OC₂H₅; and m denotes an integer of 1 to 3. 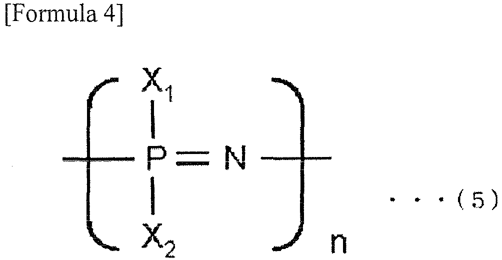 wherein in the formula (5), X₁ and X₂ each independently denote a halogen element or a monovalent substituent; the monovalent substituent denotes an alkyl group, an alkoxy group, an aryl group, an acyl group, an aryloxy group, an amino group, an alkylthio group, an arylthio group, a halogenated alkyl group, a halogenated alkoxy group, a halogenated aryl group, a halogenated acyl group, a halogenated aryloxy group, a halogenated amino group, a halogenated alkylthio group, or a halogenated arylthio group; n denotes an integer of 3 to 5; and the formula (5) may be cyclic. 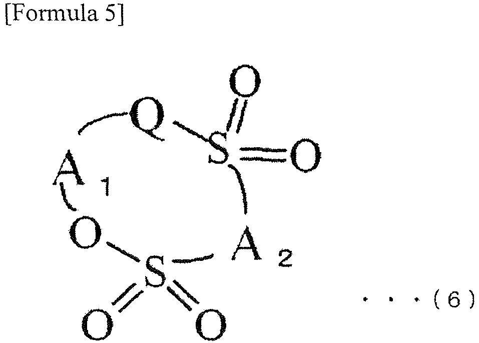 wherein in the formula (6), Q denotes an oxygen atom, a methylene group or a single bond; A₁ denotes a substituted or unsubstituted alkylene group having 1 to 5 carbon atoms which may be branched, a carbonyl group, a sulfinyl group, a substituted or unsubstituted perfluoroalkylene group having 1 to 5 carbon atoms which may be branched, a substituted or unsubstituted fluoroalkylene group having 2 to 6 carbon atoms which may be branched, a substituted or unsubstituted alkylene group having 1 to 6 carbon atoms which contains an ether bond and may be branched, a substituted or unsubstituted perfluoroalkylene group having 1 to 6 carbon atoms which contains an ether bond and may be branched, or a substituted or unsubstituted fluoroalkylene group having 2 to 6 carbon atoms which contains an ether bond and may be branched; and A₂ denotes a substituted or unsubstituted alkylene group which may be branched, a fluoromethylene group, or an oxygen atom. 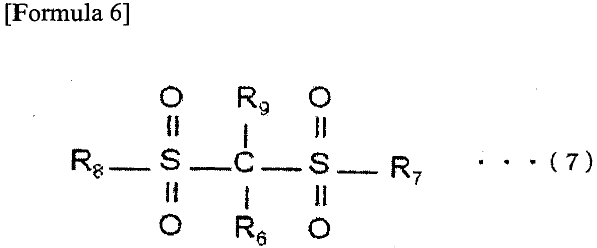 wherein in the formula (7), R₆ and R₉ each independently denote an atom or a group selected from a hydrogen atom, a substituted or unsubstituted alkyl group having 1 to 5 carbon atoms, a substituted or unsubstituted alkoxy group having 1 to 5 carbon atoms, a substituted or unsubstituted fluoroalkyl group having 1 to 5 carbon atoms, a polyfluoroalkyl group having 1 to 5 carbon atoms, -SO₂X₃ (wherein X₃ is a substituted or unsubstituted alkyl group having 1 to 5 carbon atoms), -SY₁ (wherein Y₁ is a substituted or unsubstituted alkyl group having 1 to 5 carbon atoms), -COZ (wherein Z is a hydrogen atom or a substituted or unsubstituted alkyl group having 1 to 5 carbon atoms), and a halogen atom; and R₇ and R₈ each independently denote an atom or a group selected from a substituted or unsubstituted alkyl group having 1 to 5 carbon atoms, a substituted or unsubstituted alkoxy group having 1 to 5 carbon atoms, a substituted or unsubstituted phenoxy group, a substituted or unsubstituted fluoroalkyl group having 1 to 5 carbon atoms, a polyfluoroalkyl group having 1 to 5 carbon atoms, a substituted or unsubstituted fluoroalkoxy group having 1 to 5 carbon atoms, a polyfluoroalkoxy group having 1 to 5 carbon atoms, a hydroxyl group, a halogen atom, -NX₄X₅ (wherein X₄ and X₅ are each independently a hydrogen atom or a substituted or unsubstituted alkyl group having 1 to 5 carbon atoms), and - NY₂CONY₃Y₄ (wherein Y₂ to Y₄ are each independently a hydrogen atom or a substituted or unsubstituted alkyl group having 1 to 5 carbon atoms). 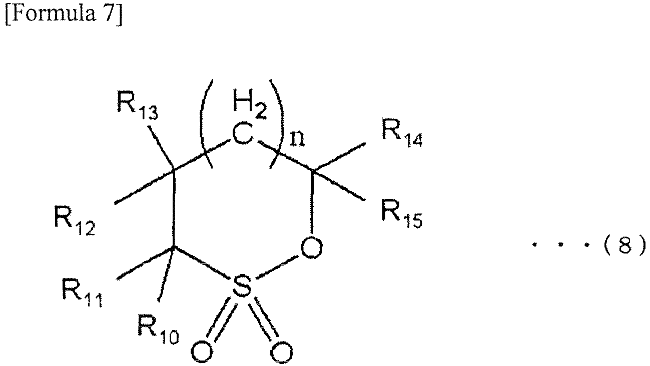 wherein in the formula (8), R₁₀ to R₁₅ each independently denote an atom or a group selected from a hydrogen atom, an alkyl group having 1 or more and 12 or fewer carbon atoms, a cycloalkyl group having 3 or more and 6 or fewer carbon atoms, and an aryl group having 6 or more and 12 or fewer carbon atoms; and n denotes an integer of 0 or more and 2 or less.

### Advantageous Effects of Invention

According to the gel electrolyte for a lithium ion secondary battery and the lithium ion secondary battery having the gel electrolyte according to the present exemplary embodiment, a lithium ion secondary battery can be obtained which concurrently has high safety and good life characteristics over a long period.

### Brief Description of Drawings

Figure 1 is a diagram illustrating a constitution of a positive electrode of a lithium ion secondary battery in Example 1 according to the present exemplary embodiment.
Figure 2 is a diagram illustrating a constitution of a negative electrode of the lithium ion secondary battery in Example 1 according to the present exemplary embodiment.
Figure 3 is a diagram illustrating a constitution of a battery element after being wound of the lithium ion secondary battery in Example 1 according to the present exemplary embodiment.

### Description of Embodiments

According to the present exemplary embodiment, incorporation of a specific disulfonate ester and a specific sultone compound having a large suppressing effect on the reductive degradation of a compound having a phosphazene structure can suppress the reductive degradation of a compound having a phosphazene structure on a negative electrode active material. Thereby, an increase in the resistance due to the reductive degradation of a compound having a phosphazene structure can be suppressed, and a good capacity retention rate can be attained over a long period. Further according to the present exemplary embodiment, since the reduction of a compound having a phosphazene structure can be suppressed over a long period and an effective amount of the compound having a phosphazene structure is then present in a gel electrolyte even after long-term usage, high flame retardancy can be attained over a long period. Additionally, the amount of gases generated at first-time charging can be reduced. Further, although a significant amount of a sultone compound represented by the above formula (8) is conventionally needed to stabilize the phosphazene compound at high temperatures, combination with the gel electrolyte according to the present exemplary embodiment can provide a certain SEI-alternative effect with the gel electrolyte according to the present exemplary embodiment.

Further according to the present exemplary embodiment, since no radical polymerization initiator such as an organic peroxide is needed in gelation of an electrolyte solution, a compound having a phosphazene structure, and further at least one compound, which has a high SEI-formation capability, selected from a cyclic disulfonate ester represented by the above formula (6), a chain disulfonate ester represented by the above formula (7) and a sultone compound represented by the above formula (8), are not degraded in heat polymerization; and since the radical polymerization initiator is unnecessary for batteries, the influence of residues after polymerization never causes a decrease in battery characteristics. In addition, in a gel electrolyte, there is no concern about solution leakage as compared with an electrolyte solution, and the close contact between both a negative electrode and a positive electrode, and a separator is good, and thus good life characteristics can be provided over a long period. Hereinafter, the present exemplary embodiment will be described in detail.

The gel electrolyte for a lithium ion secondary battery according to the present exemplary embodiment contains a lithium salt, a copolymer of a monomer represented by the following formula (1) or (2) and a monomer represented by the following formula (4), and a compound having a phosphazene structure represented by the following formula (5), and contains, as an additive, at least one compound selected from a cyclic disulfonate ester represented by the following formula (6), a chain disulfonate ester represented by the following formula (7), and a sultone compound represented by the following formula (8). 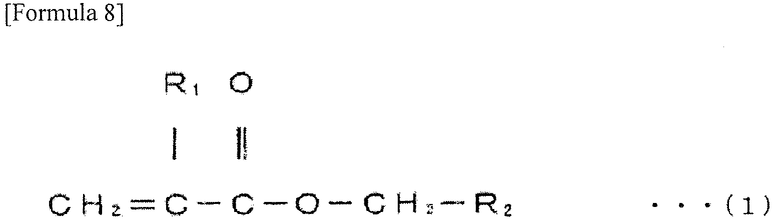 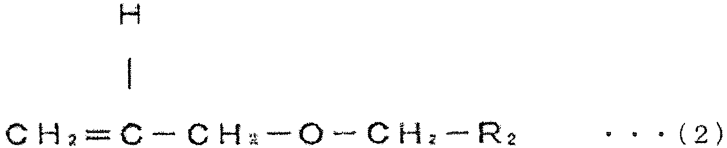 wherein in the formula (1), R₁ denotes H or CH₃; and in the formulas (1) and (2), R₂ denotes one of substituents represented by the following formula (3).

[Formula 9] 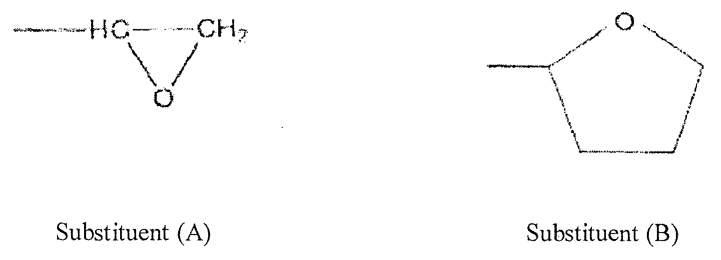 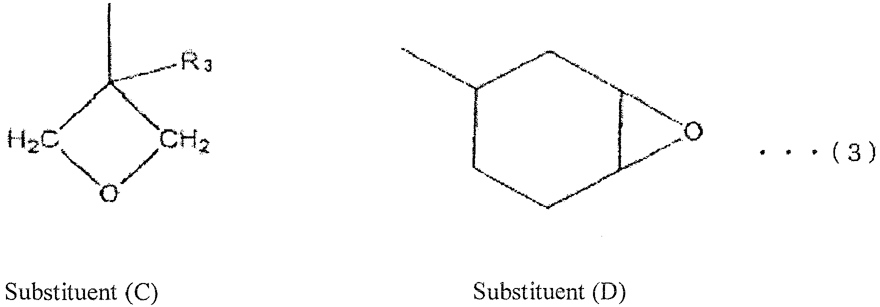 wherein in the formula (3), R₃ denotes an alkyl group having 1 to 6 carbon atoms. 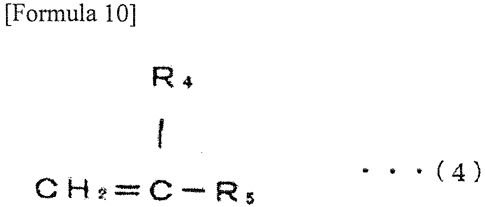 wherein in the formula (4), R₄ denotes H or CH₃; R₅ denotes -COOCH₃, -COOC₂H₅, -COOC₃H₇, -COOC₄H₉, -COOCH₂CH(CH₃)₂, -COO(CH₂CH₂O)ₘCH₃, -COO(CH₂CH₂O)ₘC₄H₉, - COO(CH₂CH₂CH₂O)ₘCH₃, -COO(CH₂CH(CH₃)O)ₘCH₃, -COO(CH₂CH(CH₃)O)ₘC₂H₅, - OCOCH₃, -OCOC₂H₅, or -CH₂OC₂H₅; and m denotes an integer of 1 to 3. 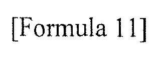 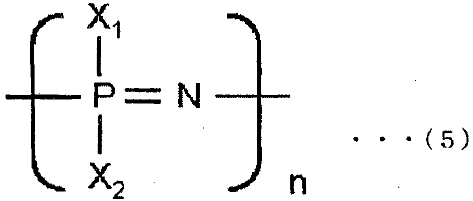 wherein in the formula (5), X₁ and X₂ each independently denote a halogen element or a monovalent substituent; the monovalent substituent denotes an alkyl group, an alkoxy group, an aryl group, an acyl group, an aryloxy group, an amino group, an alkylthio group, an arylthio group, a halogenated alkyl group, a halogenated alkoxy group, a halogenated aryl group, a halogenated acyl group, a halogenated aryloxy group, a halogenated amino group, a halogenated alkylthio group, or a halogenated arylthio group; n denotes an integer of 3 to 5; and the formula (5) may be cyclic. 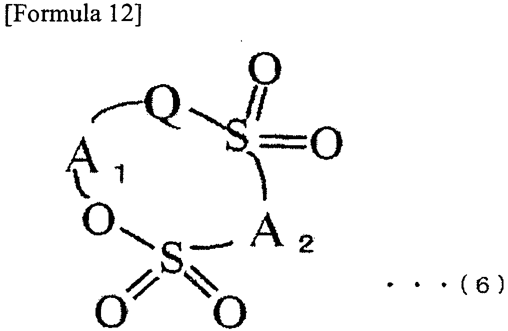 wherein in the formula (6), Q denotes an oxygen atom, a methylene group or a single bond; A₁ denotes a substituted or unsubstituted alkylene group having 1 to 5 carbon atoms which may be branched, a carbonyl group, a sulfinyl group, a substituted or unsubstituted perfluoroalkylene group having 1 to 5 carbon atoms which may be branched, a substituted or unsubstituted fluoroalkylene group having 2 to 6 carbon atoms which may be branched, a substituted or unsubstituted alkylene group having 1 to 6 carbon atoms which contains an ether bond and may be branched, a substituted or unsubstituted perfluoroalkylene group having 1 to 6 carbon atoms which contains an ether bond and may be branched, or a substituted or unsubstituted fluoroalkylene group having 2 to 6 carbon atoms which contains an ether bond and may be branched; and A₂ denotes a substituted or unsubstituted alkylene group which may be branched, a fluoromethylene group, or an oxygen atom. 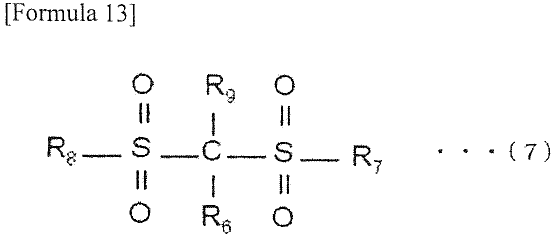 wherein in the formula (7), R₆ and R₉ each independently denote an atom or a group selected from a hydrogen atom, a substituted or unsubstituted alkyl group having 1 to 5 carbon atoms, a substituted or unsubstituted alkoxy group having 1 to 5 carbon atoms, a substituted or unsubstituted fluoroalkyl group having 1 to 5 carbon atoms, a polyfluoroalkyl group having 1 to 5 carbon atoms, -SO₂X₃ (wherein X₃ is a substituted or unsubstituted alkyl group having 1 to 5 carbon atoms), -SY₁ (wherein Y₁ is a substituted or unsubstituted alkyl group having 1 to 5 carbon atoms), -COZ (wherein Z is a hydrogen atom or a substituted or unsubstituted alkyl group having 1 to 5 carbon atoms), and a halogen atom; and R₇ and R₈ each independently denote an atom or a group selected from a substituted or unsubstituted alkyl group having 1 to 5 carbon atoms, a substituted or unsubstituted alkoxy group having 1 to 5 carbon atoms, a substituted or unsubstituted phenoxy group, a substituted or unsubstituted fluoroalkyl group having 1 to 5 carbon atoms, a polyfluoroalkyl group having 1 to 5 carbon atoms, a substituted or unsubstituted fluoroalkoxy group having 1 to 5 carbon atoms, a polyfluoroalkoxy group having 1 to 5 carbon atoms, a hydroxyl group, a halogen atom, -NX₄X₅ (wherein X₄ and X₅ are each independently a hydrogen atom or a substituted or unsubstituted alkyl group having 1 to 5 carbon atoms), and - NY₂CONY₃Y₄ (wherein Y₂ to Y₄ are each independently a hydrogen atom or a substituted or unsubstituted alkyl group having 1 to 5 carbon atoms). 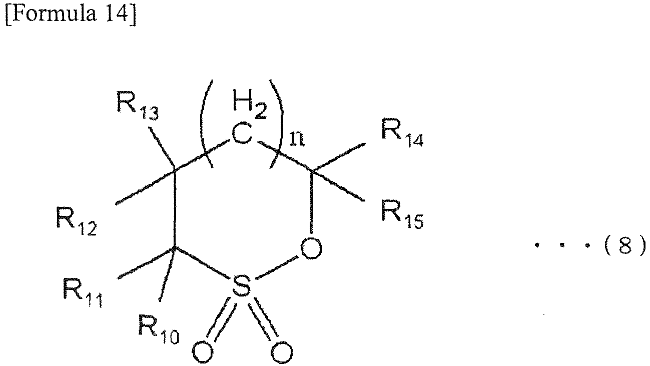 wherein in the formula (8), R₁₀ to R₁₅ each independently denote an atom or a group selected from a hydrogen atom, an alkyl group having 1 or more and 12 or fewer carbon atoms, a cycloalkyl group having 3 or more and 6 or fewer carbon atoms, and an aryl group having 6 or more and 12 or fewer carbon atoms; and n denotes an integer of 0 or more and 2 or less.

Examples of a monomer represented by the above formula (1) or (2) include (3-ethyl-3-oxetanyl)methyl methacrylate, glycidyl methacrylate and 3,4-epoxycyclohexylmethyl methacrylate. These may be used singly or concurrently in two or more. Here, a monomer represented by the above formula (1) or (2) may be represented as a monomer having a ring-opening polymerizable functional group.

Examples of a monomer represented by the above formula (4) include methyl acrylate, ethyl acrylate, methyl methacrylate, propyl methacrylate, methoxytriethylene glycol methacrylate and methoxydipropylene glycol acrylate. The monomer represented by the above formula (4) may be used singly or concurrently in two or more. Here, a monomer represented by the above formula (4) may be represented as a monomer having no ring-opening polymerizable functional group.

A step of obtaining a gel electrolyte being the present exemplary embodiment is divided into Step A: a step of synthesizing a copolymer of a monomer represented by the above formula (1) or (2) and a monomer represented by the above formula (4); and Step B: a step of incorporating a lithium salt, the copolymer of the monomer represented by the following formula (1) or (2) and the monomer represented by the following formula (4), which has been obtained in Step A, and a compound having a phosphazene structure represented by the following formula (5), and incorporating, as an additive, at least one compound selected from a cyclic disulfonate ester represented by the following formula (6), a chain disulfonate ester represented by the following formula (7), and a sultone compound represented by the following formula (8), and heating the mixture for gelation.
The Step A: a copolymer of a monomer represented by the above formula (1) or (2) and a monomer represented by the above formula (4) can be synthesized using a radical polymerization initiator. Examples of the radical polymerization initiator include azo-based initiators such as N,N-azobisisobutyronitrile and dimethyl N,N'-azobis(2-methylpropionate), and organic peroxide-based initiators such as benzoyl peroxide and lauroyl peroxide. Since such a radical polymerization initiator bonds to a terminal of the copolymer of the monomer represented by the above formula (1) or (2) and the monomer represented by the above formula (4) along with the initiation of the reaction, and is thereby inactivated, the radical polymerization initiator causes no reaction again by reheating after the completion of the reaction.

As the compound having a phosphazene structure, a compound represented by the above formula (5) is used because of exhibiting flame retardancy. Examples of the compound represented by the above formula (5) include monoethoxypentafluorocyclotriphosphazene, diethoxytetrafluorocyclotriphosphazene and monophenoxypentafluorotriphosphazene. These may be used singly or concurrently in two or more. In the compound having a phosphazene structure represented by the above formula (5), X₁ and X₂ may be each independently a different group between units.

From the viewpoint of suppressing reductive degradation of the compound having a phosphazene structure, as a cyclic disulfonate ester, a compound represented by the above formula (6) is used; and as a chain disulfonate ester, a compound represented by the above formula (7) is used.

Representative examples of a cyclic disulfonate ester represented by the above formula (6) are specifically shown in Table 1, and representative examples of a chain disulfonate ester represented by the above formula (7) are specifically shown in Table 2, but the present exemplary embodiment is not limited thereto. These compounds may be used singly or concurrently in two or more.

**[Table 1]**

| Compound No. | Chemical Structure | Compound No. | Chemical Structure | Compound No. | Chemical Structure | Compound No. | Chemical Structure |
|---|---|---|---|---|---|---|---|
| **1** | 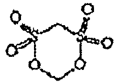 | **8** | 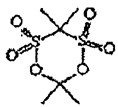 | **15** | 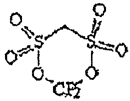 | **22** | 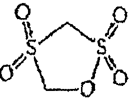 |
| **2** | 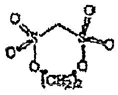 | **9** | 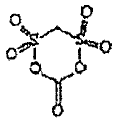 | **16** | 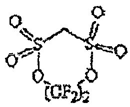 | | |
| **3** | 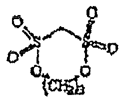 | **10** | 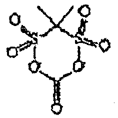 | **17** | 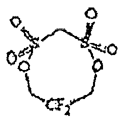 | | |
| **4** | 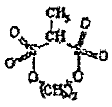 | **11** | 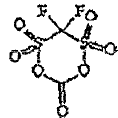 | **18** | 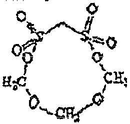 | | |
| **5** | 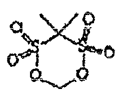 | **12** | 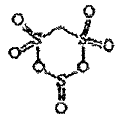 | **19** | 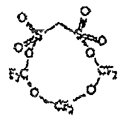 | | |
| **6** | 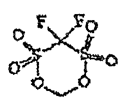 | **13** | 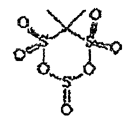 | **20** | 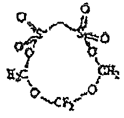 | | |
| **7** | 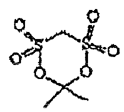 | **14** | 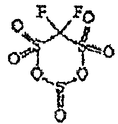 | **21** | 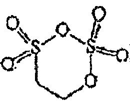 | | |

**[Table 2]**

| Compound No. | Chemical Structure | Compound No. | Chemical Structure | Compound No. | Chemical Structure |
|---|---|---|---|---|---|
| **101** | 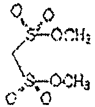 | **109** | 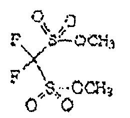 | **117** | 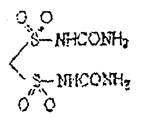 |
| **102** | 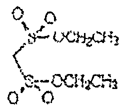 | **110** | 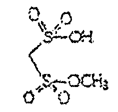 | **118** | 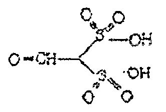 |
| **103** | 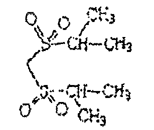 | **111** | 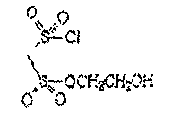 | **119** | 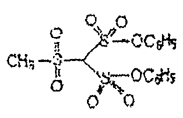 |
| **104** | 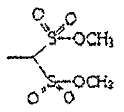 | **112** | 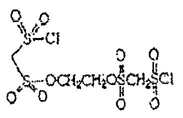 | **120** | 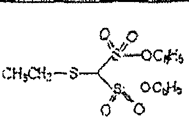 |
| **105** | 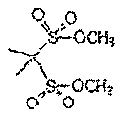 | **113** | 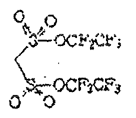 | | |
| **106** | 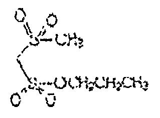 | **114** | 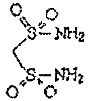 | | |
| **107** | 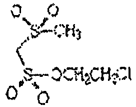 | **115** | 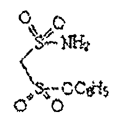 | | |
| **108** | 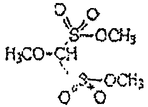 | **116** | 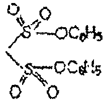 | | |

A cyclic disulfonate ester represented by the above formula (6) and a chain disulfonate ester represented by the above formula (7) can be obtained using a production method described in JP5-44946B.

As a sultone compound represented by the above formula (8), for example, 1,3-propanesultone, 1,4-butanesultone or a derivative thereof can be used, but the sultone compound is not limited thereto. These compounds may be used singly or concurrently in two or more. Although a significant amount of a sultone compound represented by the above formula (8) is conventionally needed to stabilize the phosphazene compound at high temperatures, combination with the gel electrolyte according to the present exemplary embodiment can provide a certain SEI-alternative effect with the gel electrolyte according to the present exemplary embodiment.

A step of obtaining the gel electrolyte according to the present exemplary embodiment includes Step A: a step of synthesizing a copolymer of a monomer represented by the above formula (1) or (2) and a monomer represented by the above formula (4); and Step B: a step of incorporating a lithium salt and the copolymer of the monomer represented by the following formula (1) or (2) and the monomer represented by the following formula (4), which have been obtained in Step A, and a compound having a phosphazene structure represented by the following formula (5), and dissolving, as an additive, at least one compound selected from a cyclic disulfonate ester represented by the following formula (6), a chain disulfonate ester represented by the following formula (7), and a sultone compound represented by the following formula (8), to thereby make a solution and subjecting the solution to crosslinking for gelation in the presence of a cationic polymerization initiator.

As the cationic polymerization initiator, various types of onium salts (for example, salts of cations, such as ammonium and phosphonium, and anions, such as -BF₄, -PF₆, -CF₃SO₃, and the like), and lithium salts such as LiBF₄ and LiPF₆ can be used.

In the gel electrolyte according to the present exemplary embodiment, the proportion of at least one compound selected from a cyclic disulfonate ester represented by the above formula (6), a chain disulfonate ester represented by the above formula (7), and a sultone compound represented by the above formula (8) is preferably 0.05 to 12% by mass based on the total of the gel electrolyte. In the case of being less than 0.05% by mass based on the total of the gel electrolyte, the effect of a surface membrane in which the reductive degradation of the compound having a phosphazene structure is suppressed cannot sufficiently be attained. By contrast, in the case where the proportion exceeds 12% by mass based on the total of the gel electrolyte, an increase in the resistance cannot be suppressed and battery characteristics cannot be improved further. The proportion is more preferably 0.1% by mass or more and 10% by mass or lower, and making the proportion in this range can further improve the effect of the surface membrane.

Further according to the gel electrolyte according to the present exemplary embodiment, since no radical polymerization initiator such as an organic peroxide is needed in Step B of obtaining the gel electrolyte according to the present exemplary embodiment, a compound having a phosphazene structure, and further at least one compound, which has a high SEI-formation capability, selected from a cyclic disulfonate ester represented by the above formula (6), a chain disulfonate ester represented by the above formula (7) and a sultone compound represented by the above formula (8), are not degraded in heat polymerization; and since the radical polymerization initiator is unnecessary for batteries, the influence of residues after polymerization never causes a decrease in battery characteristics. The gel electrolyte has little concern about solution leakage as compared with an electrolyte solution, and the close contact between both a negative electrode and a positive electrode, and a separator is good, and thus good life characteristics can be provided over a long period.

The gel electrolyte according to the present exemplary embodiment can further reduce the amount of gases generated at first-time charging, which is preferable also from the viewpoint of the safety. This is conceivably because the concurrent presence of a compound having a phosphazene structure and a disulfonate ester in a gel electrolyte in the proportion described above can form an SEI incorporating the compound having a phosphazene structure by a reaction mechanism different from the SEI formation by a gel electrolyte containing only a disulfonate ester and a sultone compound.

The gel electrolyte preferably contains 3% by mass or more and 20% by mass or less of the compound having a phosphazene structure based on the total of the gel electrolyte. Incorporation of 3% by mass or more of a compound having a phosphazene structure based on the total of a nonaqueous-type electrolyte solution can provide a sufficient flame retardancy effect; and incorporation of 20% by mass or less thereof can suppress a decrease in the ionic conductivity.

The gel electrolyte for a lithium ion secondary battery according to the present exemplary embodiment may contain an aprotic solvent. Examples of the aprotic solvent include cyclic carbonates such as propylene carbonate (PC), ethylene carbonate (EC), butylene carbonate (BC) and vinylene carbonate (VC), chain carbonates such as dimethyl carbonate (DMC), diethyl carbonate (DEC), ethyl methyl carbonate (EMC) and dipropyl carbonate (DPC), aliphatic carboxylate esters such as methyl formate, methyl acetate and ethyl propionate;, γ-lactones such as γ-butyrolactone, chain ethers such as 1,2-diethoxyethane (DEE) and ethoxymethoxyethane (EME), cyclic ethers such as tetrahydrofuran and 2-methyltetrahydrofuran;, dimethyl sulfoxide, 1,3-dioxolane, formamide, acetamide, dimethylformamide, dioxolane, acetonitrile, propylnitrile, nitromethane, ethylmonoglyme, phosphate triester, trimethoxymethane, dioxolane derivatives, sulfolane, methylsulfolane, 1,3-dimethyl-2-imidazolidinone, 3-methyl-2-oxazolidinone, propylene carbonate derivatives, tetrahydrofuran derivatives, ethyl ether, anisole, N-methylpyrrolidone, and fluorocarboxylate esters. These aprotic organic solvents can be used singly or as a mixture of two or more, but are not limited thereto.

Examples of the lithium salt contained in the gel electrolyte for a lithium ion secondary battery according to the present exemplary embodiment include LiPF₆, LiBF₄, LiAsF₆, LiSbF₆, LiClO₄, LiAlCl₄, LiN(CₙF₂ₙ₊₁SO₂)(CₘF₂ₘ₊₁SO₂) (n and m are natural numbers), and LiCF₃SO₃, but are not limited thereto.

As a negative electrode active material contained in a negative electrode of a lithium ion secondary battery having the gel electrolyte for a lithium ion secondary battery according to the present exemplary embodiment, one or two or more materials can be used which are selected from the group consisting of, for example, metallic lithium, lithium alloys and materials capable of absorbing and releasing lithium. As the material capable of absorbing and releasing lithium ions, a carbon material or an oxide can be used.

As the carbon material, graphite, amorphous carbon, diamond-like carbon, carbon nanotubes and the like to absorb lithium, and composite materials thereof can be used. Particularly graphite has a high electron conductivity, is excellent in the adhesivity with a current collector composed of a metal such as copper, and the voltage flatness, and contains only a low content of impurities because of being formed at a high treatment temperature, which are preferably advantageous for improvement of the negative electrode performance. Further, a composite material of a high-crystalline graphite and a low-crystalline amorphous carbon, and the like can also be used.

As the oxide, one of silicon oxide, tin oxide, indium oxide, zinc oxide, lithium oxide, phosphoric acid and boric acid, or a composite thereof may be used, and the oxide preferably contains especially silicon oxide. The structure is preferably in an amorphous state. This is because silicon oxide is stable and causes no reaction with other compounds, and because the amorphous structure introduces no deteriorations caused by non-uniformity such as crystal grain boundaries and defects. As a film-formation method, a vapor-deposition method, a CVD method, a sputtering method and the like can be used.

The lithium alloy is constituted of lithium and metals alloyable with lithium. For example, the lithium alloy is constituted of a binary, ternary, or more multi-metal alloy of metals such as Al, Si, Pb, Sn, In, Bi, Ag, Ba, Ca, Hg, Pd, Pt, Te, Zn and La, with lithium. Metallic lithium and lithium alloys are especially preferably in an amorphous state. This is because the amorphous structure hardly causes deteriorations caused by non-uniformity such as crystal grain boundaries and defects.

Metallic lithium and lithium alloys can be suitably formed by a system such as a melt cooling system, a liquid quenching system, an atomizing system, a vacuum vapor-deposition system, a sputtering system, a plasma CVD system, an optical CVD system, a thermal CVD system and a sol-gel system.

Examples of a positive electrode active material contained in a positive electrode of a lithium ion secondary battery having the gel electrolyte for a lithium ion secondary battery according to the present exemplary embodiment include lithium-containing composite oxides such as LiCoO₂, LiNiO₂ and LiMn₂O₄. A transition metal part of the lithium-containing composite oxides may be replaced by another element.

A lithium-containing composite oxide having a plateau of 4.5 V or higher vs. a counter electrode potential of metallic lithium may be used. Examples of the lithium-containing composite oxide include a spinel-type lithium-manganese composite oxide, an olivine-type lithium-containing composite oxide and an inverse-spinel-type lithium-containing composite oxide. An example of the lithium-containing composite oxide includes a compound represented by Liₐ(MₓMn₂₋ₓ)O₄ (here, 0 < x < 2; and 0 < a < 1.2. M is at least one selected from the group consisting of Ni, Co, Fe, Cr and Cu).

In a battery constitution of the lithium ion secondary battery according to the present exemplary embodiment, as an electrode element, a laminated body or a wound body can be used; and as an outer packing body, an aluminum laminate outer packing body or a metal outer packing body can be used. Further, the battery capacity is not limited.

### Examples

Hereinafter, the present exemplary embodiment will be described in detail by way of Examples by reference to drawings, but the present exemplary embodiment is not limited to the Examples.

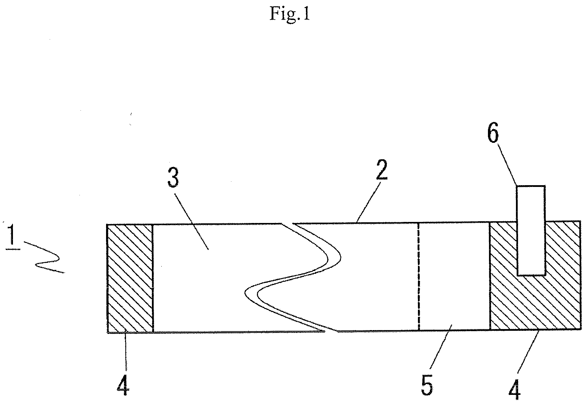

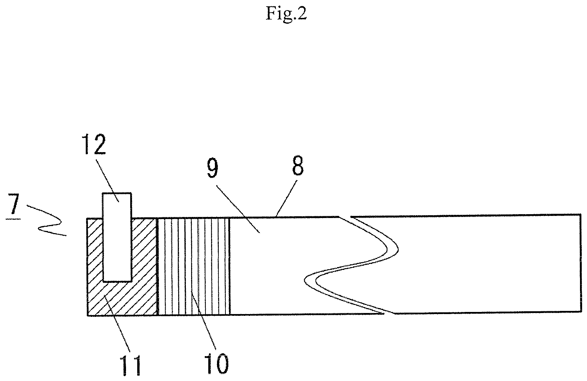

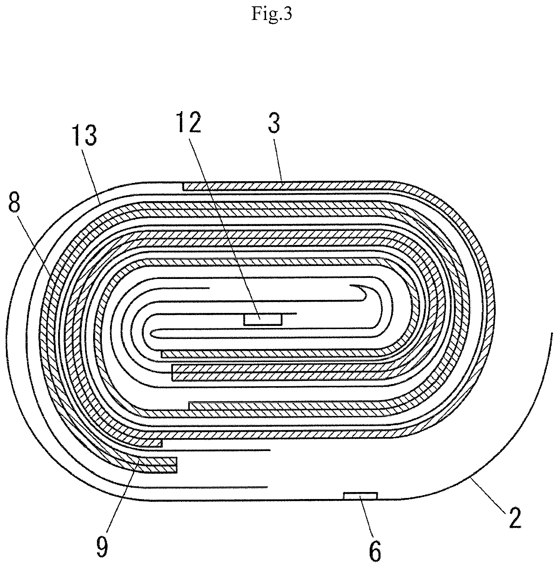

Figure 1 is a diagram illustrating a constitution of a positive electrode of a lithium ion secondary battery in Example 1 according to the present exemplary embodiment. Figure 2 is a diagram illustrating a constitution of a negative electrode of the lithium ion secondary battery in Example 1 according to the present exemplary embodiment. Figure 3 is a cross-sectional diagram illustrating a constitution of a battery element after being wound of the lithium ion secondary battery in Example 1 according to the present exemplary embodiment.

### (Example 1)

First, fabrication of a positive electrode 1 will be described by way of Figure 1. 85% by mass of LiMn₂O₄, 7% by mass of an acetylene black as a conductive auxiliary material and 8% by mass of a polyvinylidene fluoride as a binder were mixed; and N-methylpyrrolidone was added to the mixture, and further mixed to thereby fabricate a positive electrode slurry. The positive electrode slurry was applied on both surfaces of an Al foil 2 having a thickness of 20 µm to become a current collector by a doctor blade method so that the thickness after roll pressing became 160 µm, dried at 120°C for 5 min, and thereafter subjected to a roll pressing step to thereby form positive electrode active material-applied parts 3. Positive electrode active material-unapplied parts 4, on which no positive electrode active material was applied, were provided on both end portions of the foil. A positive electrode conductive tab 6 was provided on one of the positive electrode active material-unapplied parts 4. A positive electrode active material-one surface-applied part 5, which was one surface having the positive electrode active material applied only onto the one surface, was provided adjacent to the positive electrode active material-unapplied part 4 on which the positive electrode conductive tab 6 was provided. The positive electrode 1 was thus fabricated.

Fabrication of a negative electrode 7 will be described by way of Figure 2. 90% by mass of a graphite, 1% by mass of an acetylene black as a conductive auxiliary material and 9% by mass of a polyvinylidene fluoride as a binder were mixed; and N-methylpyrrolidone was added to the mixture, and further mixed to thereby fabricate a negative electrode slurry. The negative electrode slurry was applied on both surfaces of a Cu foil 8 having a thickness of 10 µm to become a current collector by a doctor blade method so that the thickness after roll pressing became 120 µm, dried at 120°C for 5 min, and thereafter subjected to a roll pressing step to thereby form negative electrode active material-applied parts 9. A negative electrode active material-one surface-applied part 10, which was one surface having the negative electrode active material applied only on the one surface, and a negative electrode active material-unapplied part 11, on which no negative electrode active material was applied, were provided on one end portion surface of both end portions, and a negative electrode conductive tab 12 was provided on the negative electrode active material-unapplied part 11. The negative electrode 7 was thus fabricated.

Fabrication of a battery element will be described by way of Figure 3. A fused and cut portion of two sheets of a separator 13 composed of a polypropylene microporous membrane having a membrane thickness of 25 µm and a porosity of 55% and subjected to a hydrophilicizing treatment was fixed and wound to a winding core of a winding apparatus, and front ends of the positive electrode 1 (Figure 1) and the negative electrode 7 (Figure 2) were introduced. The negative electrode 7 was disposed between the two sheets of the separator, and the positive electrode 1 was disposed on the upper surface of the separator, with the opposite side of the connection part of the positive electrode conductive tab 6 and the connection part side of the negative electrode conductive tab 12 made as front end sides of the positive electrode 1 and the negative electrode 7, respectively, and wound by rotating the winding core to thereby form a battery element (hereinafter, referred to as a jelly roll (J/R)).

The J/R was accommodated in an embossed laminate outer packing body; the positive electrode conductive tab 6 and the negative electrode conductive tab 12 were pulled out; and one side of the laminate outer packing body was folded back, and thermally fused with a portion for solution injection being left unfused.

As monomers for a polymer for a gel electrolyte, ethyl acrylate and (3-ethyl-3-oxetanyl)methyl methacrylate were placed in proportions of 74% by mass and 26% by mass, respectively. A solvent as a reaction solvent of ethylene carbonate (EC) : diethyl carbonate

(DEC) = 30/70 (in volume ratio), and 2500 ppm of N,N'-azobisisobutyronitrile as a polymerization initiator based on the monomer mass were further added, and heated and reacted at 65 to 70°C under introduction of a dry nitrogen gas, and thereafter cooled to room temperature. Thereafter, the solvent of EC/DEC = 30/70 as a diluent solvent was added, and stirred and dissolved until the whole became homogeneous, to thereby obtain a 4.0-mass% polymer solution of EC:DEC = 30/70 (in volume ratio) with the polymer having a molecular weight of 200,000. It was confirmed that there was present no polymerization initiator as a residue in the obtained polymer solution.

A pregel solution was fabricated by mixing the 4.0-mass% polymer solution of EC:DEC = 30/70 (in volume ratio) with the polymer having a molecular weight of 200,000, a 1.2 mol/L-LiPF₆ aprotic solvent of ethylene carbonate (EC)/diethyl carbonate (DEC) = 30/70 (in volume ratio), 10% by mass of monoethoxypentafluorocyclotriphosphazene based on the pregel solution, and 2% by mass of a compound No. 2 in Table 1 based on the pregel solution.

Then, the pregel solution was injected from the laminate solution injection portion for vacuum impregnation; the solution injection portion was thermally fussed; and the injected pregel solution was heated and polymerized for gelation at 60°C for 24 hours, to thereby obtain a battery.

A discharge capacity acquired when the obtained battery was CC-CV charged (charge conditions: a CC current of 0.02 C, a CV time of 5 hours, and a temperature of 20°C) to a battery voltage of 4.2 V, and thereafter discharged at 0.02 C to a battery voltage of 3.0 V was defined as an initial capacity; and the proportion of the acquired initial capacity to a design capacity is shown in Table 3.

As rate characteristics of the obtained battery, the proportion of a 2 C capacity to a 0.2 C capacity at 20°C is shown in Table 3.

A cycle test of the obtained battery involved CC-CV charge (upper-limit voltage: 4.2 V, current: 1C, CV time: 1.5 hours) and CC discharge (lower-limit voltage: 3.0 V, current: 1 C), and either was carried out at 45°C. The capacity retention rate as a proportion of a discharge capacity at the 1000th cycle to a discharge capacity at the first cycle is shown in Table 3.

A combustion test involved placing a battery after the cycle test 10 cm above the tip end of a flame of a gas burner, observing the state of an electrolyte solution solvent volatilizing and burning, and rating the state as follows. A case where the electrolyte solution was not ignited was defined as A; a case where even if ignition was caused, the fire extinguished 2 to 3 sec after the ignition was defined as B; a case where even if ignition was caused, the fire extinguished within 10 sec was defined as C; and a case where burning continued without extinction was defined as D.

### (Example 2)

Example 2 was carried out in the same manner as in Example 1, except for mixing 2% by mass of a compound No. 101 in Table 2 as an additive.

### (Example 3)

Example 3 was carried out in the same manner as in Example 1, except for mixing 4% by mass of a compound No. 101 in Table 2 as an additive.

### (Example 4)

Example 4 was carried out in the same manner as in Example 1, except for mixing 2% by mass of a compound No. 2 in Table 1 and 2% by mass of a compound No. 101 in Table 2 as additives.

### (Example 5)

Example 5 was carried out in the same manner as in Example 1, except for mixing 2% by mass of a compound No. 2 in Table 1 and 3% by mass of 1,3-propanesultone as additives.

### (Example 6)

Example 6 was carried out in the same manner as in Example 1, except for mixing 4% by mass of a compound No. 2 in Table 1 and 6% by mass of 1,3-propanesultone as additives.

### (Example 7)

Example 7 was carried out in the same manner as in Example 6, except for adding 20% by mass of monoethoxypentafluorocyclotriphosphazene.

### (Example 8)

Example 8 was carried out in the same manner as in Example 7, except for adding 25% by mass of monoethoxypentafluorocyclotriphosphazene.

### (Example 9)

Example 9 was carried out in the same manner as in Example 1, except for mixing 5% by mass of a compound No. 2 in Table 1 and 7% by mass of 1,3-propanesultone as additives.

### (Example 10, not according to the invention)

Example 10 was carried out in the same manner as in Example 1, except for mixing 2% by mass of 1,3-propanesultone as an additive.

### (Comparative Example 1)

Comparative Example 1 was carried out in the same manner as in Example 7, except for not adding monoethoxypentafluorocyclotriphosphazene.

### (Comparative Example 2)

Comparative Example 2 was carried out in the same manner as in Example 1, except for adding no additive.

### (Comparative Example 3)

Comparative Example 3 was carried out in the same manner as in Example 1, except for adding 5% by mass of a vinylene carbonate (VC) not corresponding to any of the above formulas (6), (7) and (8) as an additive.

### (Comparative Example 4)

In Comparative Example 4, a polymer solution was prepared by using, as monomers of a polymer for a gel electrolyte, 3.8% by mass of triethylene glycol diacrylate and 1% by mass of trimethylolpropane triacrylate based on a solvent in place of ethyl acrylate and (3-ethyl-3-oxetanyl)methyl methacrylate. 0.5% by mass of t-butyl peroxypivalate based on a pregel solution was mixed as a polymerization initiator, and the pregel solution was heated and polymerized for gelation. Comparative Example 4 was carried out in the same manner as in Example 1, except for the above condition.

### (Comparative Example 5)

Comparative Example 5 was carried out in the same manner as in Comparative Example 4, except for mixing 2% by mass of 1,3-propanesultone as an additive.

The results of Examples 1 to 9 and 10 (not according to the invention) and Comparative Examples 1 to 5 are shown in Table 3.

**[Table 3]**

| | Negative Electrode Active Material/ Electrolyte | Amount of Phosphazene Compound Added (% by mass) | Additive | Amount of Additive Added (% by mass) | Initial Capacity (%) | Rate Characteristics (%) at 2 C/ 0.2 C Capacity | Capacity retention rate (%) at 1000th Cycle | Combustibility |
|---|---|---|---|---|---|---|---|---|
| Example 1 | graphite/gel | 10 | No. 2 | 2 | 88 | 75 | 68 | B |
| Example 2 | graphite/gel | 10 | No. 101 | 2 | 88 | 75 | 68 | B |
| Example 3 | graphite/gel | 10 | No. 101 | 4 | 85 | 73 | 70 | A |
| Example 4 | graphite/gel | 10 | No. 2/ No. 101 | 4 | 83 | 70 | 68 | A |
| Example 5 | graphite/gel | 10 | No. 2/PS | 5 | 86 | 73 | 67 | A |
| Example 6 | graphite/gel | 10 | No. 2/PS | 10 | 83 | 71 | 65 | A |
| Example 7 | graphite/gel | 20 | No. 2/PS | 10 | 78 | 54 | 63 | A |
| Example 8 | graphite/gel | 25 | No. 2/PS | 10 | 75 | 55 | 68 | B |
| Example 9 | graphite/gel | 10 | No. 2/PS | 12 | 73 | 53 | 65 | A |
| Example 10 | graphite/gel | 10 | PS | 2 | 65 | 50 | 61 | B |
| Comparative Example 1 | graphite/gel | 0 | No. 2/PS | 10 | 80 | 80 | 73 | D |
| Comparative Example 2 | graphite/gel | 10 | - | - | 69 | 63 | 35 | C |
| Comparative Example 3 | graphite/gel | 10 | VC | 5 | 83 | 54 | 58 | C |
| Comparative Example 4 | graphite/gel (polymerizetion initiator) | 10 | No. 2 | 2 | 75 | 41 | 48 | C |
| Comparative Example 5 | graphite/gel (polymerizetion initiator) | 10 | PS | 2 | 60 | 30 | 35 | C |

No. 2 described in the column Additive in Table 3 indicates compound No. 2 in Table 1; No. 101, compound No. 101 in Table 2; PS, 1,3-propanesultone; and VC, a vinylene carbonate not corresponding to any of the above formulas (2), (3) and (4).

As shown in Examples 1 to 6 and 9 in Table 3, in the case where the amount of monoethoxypentafluorocyclotriphosphazene added was made a fixed amount, and the amount of an additive(s) was increased, the capacity retention rate was very good. Further in the combustion test of the battery after the cycle test, the electrolyte solution was not ignited, or although ignition was caused, the fire went out 2 to 3 sec after the ignition. By contrast, in Comparative Example 1, in the combustion test of the battery after the cycle test, the electrolyte solution continued to burn. In Comparative Example 2, the capacity retention rate was low, and further in the combustion test of the battery after the cycle test, the gel electrolyte continued to burn. That is, it was found that a compound having a phosphazene structure was reductively degraded because of the absence of an additive, and an amount thereof effective for combustion suppression became not present. Also in Comparative Example 3 and Comparative Example 4, the flame retardancy decreased slightly as compared with Examples, indicating that the amount was insufficient in order to suppress the reductive degradation of a compound having a phosphazene structure. From Examples 6 to 9, although there was a possibility that a large amount of an additive(s) added made the SEI thick and the resistance increased, it was found that especially the combustion suppressing effect was sufficiently sustained also after the cycle test. By comparison of Examples 7 and 8, since an amount of monoethoxypentafluorocyclotriphosphazene added exceeding 20% by mass decreases the ionic conductivity of an electrolyte solution, the rate characteristics slightly decrease, and since the phosphazene compound in an excessive amount for the SEI was reductively degraded gradually in a long-term cycle test, the combustion suppressing effect of a battery after the long-term cycle test resulted in a slight decrease. By comparison of Examples 1 and 10 (not according to the invention), it was found that even use of 1,3-propanesultone provided an established function because the gel electrolyte according to the present exemplary embodiment used no initiator for heat polymerization.

Further by comparison with each Comparative Example, in Examples, the amount of gases generated was likely to decrease at first-time charging. This is conceivably because the concurrent presence of a compound having a phosphazene structure and a disulfonate ester in a nonaqueous electrolyte solution could form an SEI incorporating part of the compound having a phosphazene structure by a reaction mechanism different from the SEI formation by a nonaqueous electrolyte solution containing only a disulfonate ester. However, it is presumed that because further reduction of the phosphazene compound present in an electrolyte solution could be suppressed on the SEI thus formed, there was a possibility that the SEI by the disulfonate ester incorporating the phosphazene compound had a larger reductive degradation suppressing effect on some electrolyte solution components containing the phosphazene compound. It is presumed that the effect made the life characteristics good.

From Example 1 and Comparative Examples 4 and 5, it was found that in the case where the monomers according to the present exemplary embodiment were not used and a gel electrolyte was fabricated using an initiator in heat polymerization, the characteristics decreased. This is presumably because although the polymerization was initiated by an initiator to obtain a gel electrolyte as described before, since an additive(s) and a flame retardant(s) were degraded at this time, a desired effect could not be attained.

From the above, an SEI using a specific disulfonate ester and a specific sultone compound could suppress the reductive degradation of a compound having a phosphazene structure over a long period, and provide good life characteristics, and could consequently provide high safety.

Further, making the balance best between the amount of a compound having a phosphazene structure added and the amount of an additive(s) could maintain the rate characteristics and provide good life characteristics.

### (Example 11)

Example 11 was carried out in the same manner as in Example 5, except for using ethyl acrylate as a monomer having no ring-opening polymerizable functional group, and glycidyl methacrylate as a monomer having a ring-opening polymerizable functional group.

### (Example 12)

Example 12 was carried out in the same manner as in Example 5, except for using ethyl acrylate as a monomer having no ring-opening polymerizable functional group, and 3,4-epoxycyclohexylmethyl methacrylate as a monomer having a ring-opening polymerizable functional group.

### (Example 13)

Example 13 was carried out in the same manner as in Example 5, except for using methyl methacrylate as a monomer having no ring-opening polymerizable functional group, and (3-ethyl-3-oxetanyl)methyl methacrylate as a monomer having a ring-opening polymerizable functional group.

### (Example 14)

Example 14 was carried out in the same manner as in Example 5, except for using methyl methacrylate as a monomer having no ring-opening polymerizable functional group, and glycidyl methacrylate as a monomer having a ring-opening polymerizable functional group.

### (Example 15)

Example 15 was carried out in the same manner as in Example 5, except for using methyl methacrylate as a monomer having no ring-opening polymerizable functional group, and 3,4-epoxycyclohexylmethyl methacrylate as a monomer having a ring-opening polymerizable functional group.

### (Example 16)

Example 16 was carried out in the same manner as in Example 5, except for using propyl methacrylate as a monomer having no ring-opening polymerizable functional group, and (3-ethyl-3-oxetanyl)methyl methacrylate as a monomer having a ring-opening polymerizable functional group.

### (Example 17)

Example 17 was carried out in the same manner as in Example 5, except for using propyl methacrylate as a monomer having no ring-opening polymerizable functional group, and glycidyl methacrylate as a monomer having a ring-opening polymerizable functional group.

### (Example 18)

Example 18 was carried out in the same manner as in Example 5, except for using propyl methacrylate as a monomer having no ring-opening polymerizable functional group, and 3,4-epoxycyclohexylmethyl methacrylate as a monomer having a ring-opening polymerizable functional group.

### (Example 19)

Example 19 was carried out in the same manner as in Example 5, except for using methoxytriethylene glycol methacrylate as a monomer having no ring-opening polymerizable functional group, and (3-ethyl-3-oxetanyl)methyl methacrylate as a monomer having a ring-opening polymerizable functional group.

### (Example 20)

Example 20 was carried out in the same manner as in Example 5, except for using methoxytriethylene glycol methacrylate as a monomer having no ring-opening polymerizable functional group, and glycidyl methacrylate as a monomer having a ring-opening polymerizable functional group.

### (Example 21)

Example 21 was carried out in the same manner as in Example 5, except for using methoxytriethylene glycol methacrylate as a monomer having no ring-opening polymerizable functional group, and 3,4-epoxycyclohexylmethyl methacrylate as a monomer having a ring-opening polymerizable functional group.

### (Example 22)

Example 22 was carried out in the same manner as in Example 5, except for using methoxydipropylene glycol acrylate as a monomer having no ring-opening polymerizable functional group, and (3-ethyl-3-oxetanyl)methyl methacrylate as a monomer having a ring-opening polymerizable functional group.

### (Example 23)

Example 23 was carried out in the same manner as in Example 5, except for using methoxydipropylene glycol acrylate as a monomer having no ring-opening polymerizable functional group, and glycidyl methacrylate as a monomer having a ring-opening polymerizable functional group.

### (Example 24)

Example 24 was carried out in the same manner as in Example 5, except for using methoxydipropylene glycol acrylate as a monomer having no ring-opening polymerizable functional group, and 3,4-epoxycyclohexylmethyl methacrylate as a monomer having a ring-opening polymerizable functional group.

**[Table 4]**

| | Monomer Having No Ring-Opening Polymerizable Functional Group | Monomer Having Ring-Opening Polymerizable Functional Group | Amount of Phosphazene Compound Added /% by mass | Additive | Amount Added /% by mass | Initial Capacity /% | Rate Characteristics (%) at 2 C/0.2 C Capacity | Capacity retention rate (%) at 1000th cycle | Combustibility |
|---|---|---|---|---|---|---|---|---|---|
| Example 5 | 1 | 1 | | | | 86 | 73 | 67 | |
| Example 11 | | 2 | | | | 84 | 72 | 65 | |
| Example 12 | | 3 | | | | 82 | 70 | 63 | |
| Example 13 | 2 | 1 | | | | 88 | 78 | 70 | |
| Example 14 | | 2 | | | | 86 | 75 | 68 | |
| Example 15 | | 3 | | | | 81 | 71 | 67 | |
| Example 16 | 3 | 1 | | | | 87 | 75 | 75 | |
| Example 17 | | 2 | 10 | No. 2/PS | 5 | 85 | 73 | 72 | A |
| Example 18 | | 3 | | | | 80 | 70 | 70 | |
| Example 19 | 4 | 1 | | | | 89 | 78 | 75 | |
| Example 20 | | 2 | | | | 86 | 76 | 73 | |
| Example 21 | | 3 | | | | 82 | 72 | 70 | |
| Example 22 | 5 | 1 | | | | 89 | 78 | 76 | |
| Example 23 | | 2 | | | | 87 | 74 | 73 | |
| Example 24 | | 3 | | | | 83 | 72 | 71 | |

In the column Monomer Having No Ring-Opening Polymerizable Functional Group in Table 4, 1 denotes ethyl acrylate; 2, methyl methacrylate; 3, propyl methacrylate; 4, methoxytriethylene glycol methacrylate; and 5, methoxydipropylene glycol acrylate. In the column Monomer Having Ring-Opening Polymerizable Functional Group in Table 4, 1 denotes (3-ethyl-3-oxetanyl)methyl methacrylate; 2, glycidyl methacrylate; and 3, 3,4-epoxycyclohexylmethyl methacrylate.

From the above, an SEI using a specific disulfonate ester and a specific sultone compound could suppress the reductive degradation of a compound having a phosphazene structure over a long period not depending on the polymer constitution, and provide good life characteristics, and could consequently provide high safety.

### (Example 25)

Example 25 was carried out in the same manner as in Example 5, except for using diethoxytetrafluorocyclotriphosphazene as a compound having a phosphazene structure.

### (Example 26)

Example 26 was carried out in the same manner as in Example 5, except for using monophenoxypentafluorotriphosphazene as a compound having a phosphazene structure.

**[Table 5]**

| | Kind of Phosphazene | Monomer Having No Ring-Opening Polymerizable Functional Group | Monomer Having Ring-Opening Polymerizable Functional Group | Additive | Amount of Phosphazene Compound Added/% by mass | Initial Capacity /% | Rate Characteristics (%) at 2 C/0.2 C Capacity | Capacity retention rate (%) at 1000th cycle | Combustibility |
|---|---|---|---|---|---|---|---|---|---|
| Example 5 | Monoethoxypentafluorocyclotriphosphazene | methyl methacrylate | (3-ethyl-3oxetanyl)methyl methacrylate | No. 2/PS | 10 | 86 | 73 | 67 | A |
| Example 24 | Diethoxytetrafluorocyclotriphosphazene | | | | | 85 | 71 | 65 | |
| Example 25 | monophenoxypentafluorotriphosphazene | | | | | 81 | 73 | 70 | |

From the above, an SEI using a specific disulfonate ester and a specific sultone compound could suppress the reductive degradation of various compounds having phosphazene structures over a long period not depending on the polymer constitution, although the kind of the compound having a phosphazene structure was changed, and provide good life characteristics, and could consequently provide high safety.

The present exemplary embodiment can be utilized for energy storage devices such as lithium ion secondary batteries and additionally, electric double-layer capacitors and lithium ion capacitors.

Hitherto, the present invention has been described by reference to the exemplary embodiment (and Examples), but the present invention is not limited to the exemplary embodiment (and the Examples). In the constitution and the detail of the present invention, various changes and modifications understandable to those skilled in the art may be made within the scope of the present invention.

### Reference Signs List

- 1:: POSITIVE ELECTRODE
- 2:: Al FOIL
- 3:: POSITIVE ELECTRODE ACTIVE MATERIAL-APPLIED PART
- 4, 5:: POSITIVE ELECTRODE ACTIVE MATERIAL-UNAPPLIED PART
- 6:: POSITIVE ELECTRODE CONDUCTIVE TAB
- 7:: NEGATIVE ELECTRODE
- 8:: Cu FOIL
- 9:: NEGATIVE ELECTRODE ACTIVE MATERIAL-APPLIED PART
- 10:: NEGATIVE ELECTRODE ACTIVE MATERIAL-ONE SURFACE-APPLIED PART
- 11:: NEGATIVE ELECTRODE ACTIVE MATERIAL-UNAPPLIED PART
- 12:: NEGATIVE ELECTRODE CONDUCTIVE TAB
- 13:: INSULATING POROUS SHEET

## Claims

1. A gel electrolyte for a lithium ion secondary battery, comprising:
a lithium salt;
a copolymer of a monomer represented by the following formula (1) or (2) and a monomer represented by the following formula (4);
a compound having a phosphazene structure represented by the following formula (5); and
as an additive, at least one compound selected from a cyclic disulfonate ester represented by the following formula (6), and a chain disulfonate ester represented by the following formula (7): 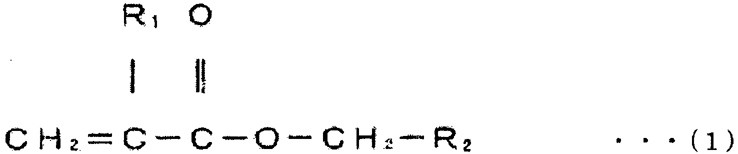 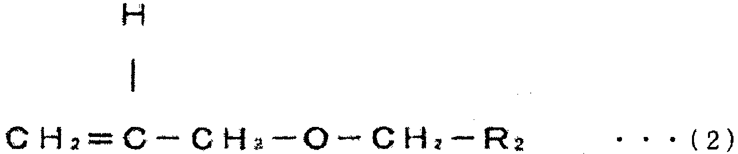 wherein in the formula (1), R₁ denotes H or CH₃; and in the formulas (1) and (2), R₂ denotes one of substituents represented by the following formula (3); 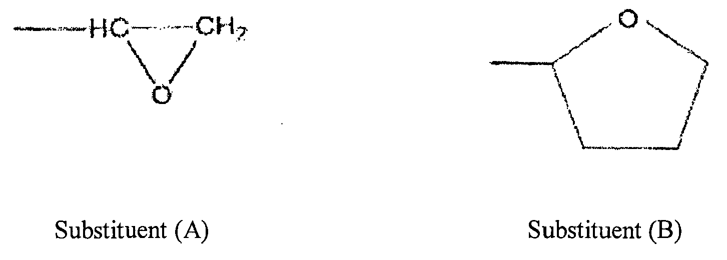 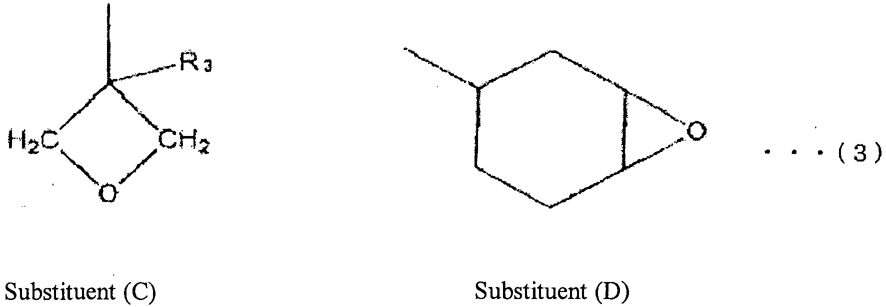 wherein in the formula (3), R₃ denotes an alkyl group having 1 to 6 carbon atoms; 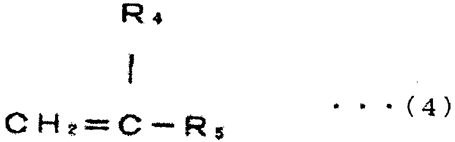 wherein in the formula (4), R₄ denotes H or CH₃; R₅ denotes -COOCH₃, -COOC₂H₅, -COOC₃H₇, -COOC₄H₉, -COOCH₂CH(CH₃)₂, -COO(CH₂CH₂O)ₘCH₃, -COO(CH₂CH₂O)ₘC₄H₉, -COO(CH₂CH₂CH₂O)ₘCH₃, -COO(CH₂CH(CH₃)O)ₘCH₃, -COO(CH₂CH(CH₃)O)ₘC₂H₅, -OCOCH₃, -OCOC₂H₅, or -CH₂OC₂H₅; and m denotes an integer of 1 to 3; 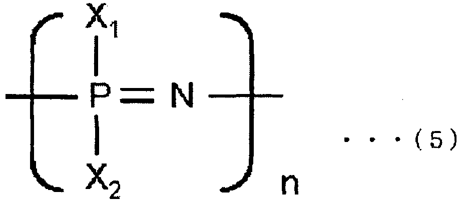
wherein in the formula (5), X₁ and X₂ each independently denote a halogen element or a monovalent substituent; the monovalent substituent denotes an alkyl group, an alkoxy group, an aryl group, an acyl group, an aryloxy group, an amino group, an alkylthio group, an arylthio group, a halogenated alkyl group, a halogenated alkoxy group, a halogenated aryl group, a halogenated acyl group, a halogenated aryloxy group, a halogenated amino group, a halogenated alkylthio group, or a halogenated arylthio group; n denotes an integer of 3 to 5; and the formula (5) may be cyclic; 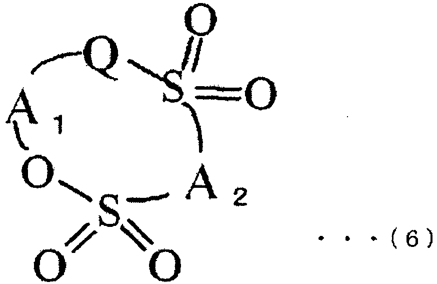 wherein in the formula (6), Q denotes an oxygen atom, a methylene group or a single bond; A₁ denotes a substituted or unsubstituted alkylene group having 1 to 5 carbon atoms which may be branched, a carbonyl group, a sulfinyl group, a substituted or unsubstituted perfluoroalkylene group having 1 to 5 carbon atoms which may be branched, a substituted or unsubstituted fluoroalkylene group having 2 to 6 carbon atoms which may be branched, a substituted or unsubstituted alkylene group having 1 to 6 carbon atoms which contains an ether bond and may be branched, a substituted or unsubstituted perfluoroalkylene group having 1 to 6 carbon atoms which contains an ether bond and may be branched, or a substituted or unsubstituted fluoroalkylene group having 2 to 6 carbon atoms which contains an ether bond and may be branched; and A₂ denotes a substituted or unsubstituted alkylene group which may be branched; or wherein the compound of formula (6) is selected from compounds 6, 11, 14 and 21 shown in Table 1; 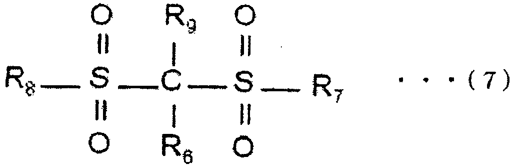 wherein in the formula (7), R₆ and R₉ each independently denote an atom or a group selected from a hydrogen atom, a substituted or unsubstituted alkyl group having 1 to 5 carbon atoms, a substituted or unsubstituted alkoxy group having 1 to 5 carbon atoms, a substituted or unsubstituted fluoroalkyl group having 1 to 5 carbon atoms, a polyfluoroalkyl group having 1 to 5 carbon atoms, -SO₂X₃ (wherein X₃ is a substituted or unsubstituted alkyl group having 1 to 5 carbon atoms), -SY₁ (wherein Y₁ is a substituted or unsubstituted alkyl group having 1 to 5 carbon atoms), -COZ (wherein Z is a hydrogen atom or a substituted or unsubstituted alkyl group having 1 to 5 carbon atoms), and a halogen atom; and R₇ and R₈ each independently denote an atom or a group selected from a substituted or unsubstituted alkyl group having 1 to 5 carbon atoms, a substituted or unsubstituted alkoxy group having 1 to 5 carbon atoms, a substituted or unsubstituted phenoxy group, a substituted or unsubstituted fluoroalkyl group having 1 to 5 carbon atoms, a polyfluoroalkyl group having 1 to 5 carbon atoms, a substituted or unsubstituted fluoroalkoxy group having 1 to 5 carbon atoms, a polyfluoroalkoxy group having 1 to 5 carbon atoms, a hydroxyl group, a halogen atom, -NX₄X₅ (wherein X₄ and X₅ are each independently a hydrogen atom or a substituted or unsubstituted alkyl group having 1 to 5 carbon atoms), and - NY₂CONY₃Y₄ (wherein Y₂ to Y₄ are each independently a hydrogen atom or a substituted or unsubstituted alkyl group having 1 to 5 carbon atoms).

2. The gel electrolyte for a lithium ion secondary battery according to claim 1, further comprising, as an additive, a sultone compound represented by the following formula (8): 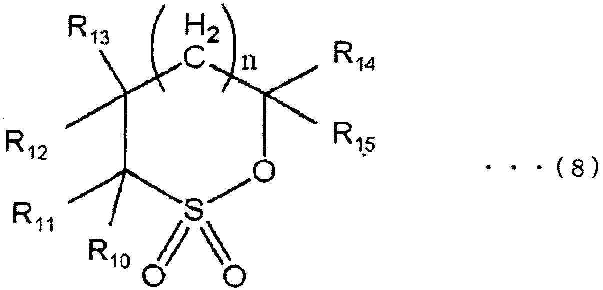 wherein in the formula (8), R₁₀ to R₁₅ each independently denote an atom or a group selected from a hydrogen atom, an alkyl group having 1 or more and 12 or fewer carbon atoms, a cycloalkyl group having 3 or more and 6 or fewer carbon atoms, and an aryl group having 6 or more and 12 or fewer carbon atoms; and n denotes an integer of 0 or more and 2 or less.

3. The gel electrolyte for a lithium ion secondary battery according to claim 1 or 2, comprising 0.05 to 12% by mass of at least one compound selected from a cyclic disulfonate ester represented by the formula (6), a chain disulfonate ester represented by the formula (7), and a sultone compound represented by the formula (8).

4. The gel electrolyte for a lithium ion secondary battery according to any one of claims 1 to 3, comprising 3 to 20% by mass of a compound having a phosphazene structure represented by the formula (5).

5. A lithium ion secondary battery comprising a gel electrolyte for a lithium ion secondary battery according to any one of claims 1 to 4.

## Patentansprüche

1. Gelelektrolyt für eine Lithiumionen-Sekundärbatterie, der aufweist:
ein Lithiumsalz;
ein Copolymer eines Monomers in der Darstellung durch die folgende Formel (1) oder (2) und eines Monomers in der Darstellung durch die folgende Formel (4);
eine Verbindung mit einer Phosphazenstruktur in der Darstellung durch die folgende Formel (5); und
als Additiv mindestens eine Verbindung, die aus einem zyklischen Disulfonatester in der Darstellung durch die folgende Formel (6) und einem kettenförmigen Disulfonatester in der Darstellung durch die folgende Formel (7) ausgewählt ist: 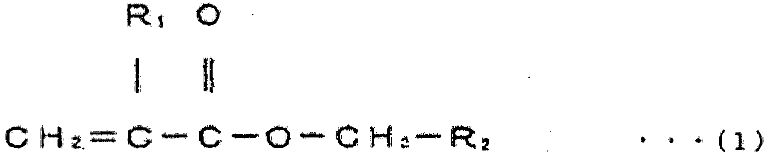 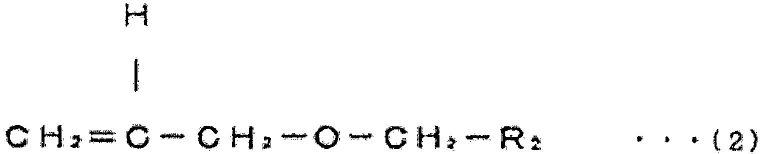 wobei in der Formel (1) R₁ H oder CH₃ bezeichnet; und in den Formeln (1) und (2) R₂ einen von Substituenten in der Darstellung durch die folgende Formel (3) bezeichnet; 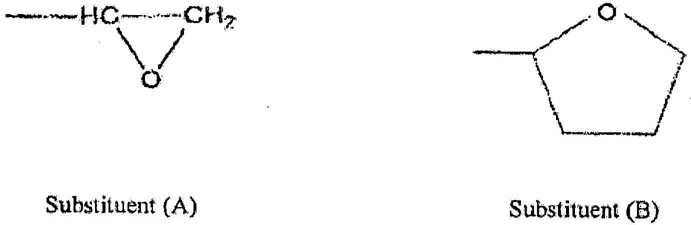 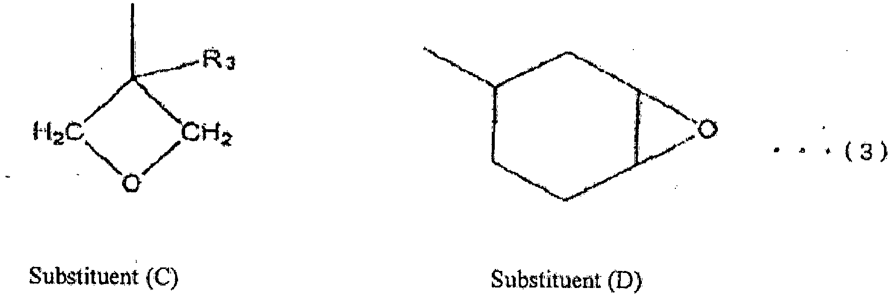 wobei in der Formel (3) R₃ eine Alkylgruppe mit 1 bis 6 Kohlenstoffatomen bezeichnet; 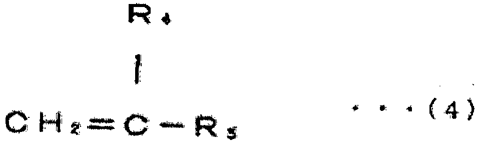 wobei in der Formel (4) R₄ H oder CH₃ bezeichnet; R₅ -COOCH₃, -COOC₂H₅, -COOC₃H₇, -COOC₄H₉, -COOCH₂CH(CH₃)₂, -COO(CH₂CH₂O)ₘCH₃, -COO(CH₂CH₂O)ₘC₄H₉, -COO(CH₂CH₂CH₂O)ₘCH₃, -COO(CH₂CH(CH₃)O)ₘCH₃, -COO(CH₂CH(CH₃)O)ₘC₂H₅, -OCOCH₃, -OCOC₂H₅ oder -CH₂OC₂H₅ bezeichnet; und m eine ganze Zahl von 1 bis 3 bezeichnet; 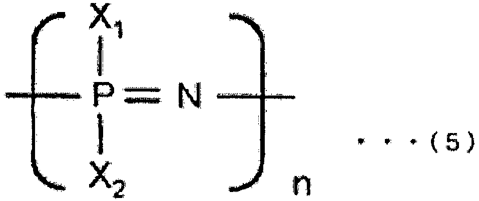 wobei in der Formel (5) X₁ und X₂ jeweils unabhängig ein Halogenelement oder einen monovalenten Substituent bezeichnen, der monovalente Substituent eine Alkylgruppe, eine Alkoxygruppe, eine Arylgruppe, eine Acylgruppe, eine Aryloxygruppe, eine Aminogruppe, eine Alkylthiogruppe, eine Arylthiogruppe, eine halogenierte Alkylgruppe, eine halogenierte Alkoxygruppe, eine halogenierte Arylgruppe, eine halogenierte Acylgruppe, eine halogenierte Aryloxygruppe, eine halogenierte Aminogruppe, eine halogenierte Alkylthiogruppe oder eine halogenierte Arylthiogruppe bezeichnet; n eine ganze Zahl von 3 bis 5 bezeichnet; und die Formel (5) zyklisch sein kann; 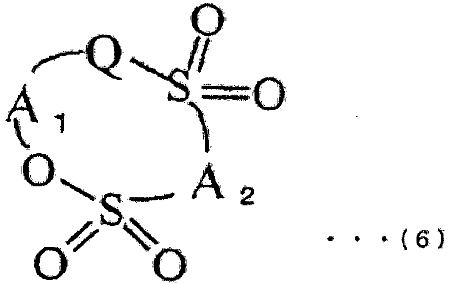 wobei in der Formel (6) Q ein Sauerstoffatom, eine Methylengruppe oder eine Einfachbindung bezeichnet; A₁ eine substituierte oder nicht substituierte Alkylengruppe mit 1 bis 5 Kohlenstoffatomen, die verzweigt sein kann, eine Carbonylgruppe, eine Sulfinylgruppe, eine substituierte oder nicht substituierte Perfluoralkylengruppe mit 1 bis 5 Kohlenstoffatomen, die verzweigt sein kann, eine substituierte oder nicht substituierte Fluoralkylengruppe mit 2 bis 6 Kohlenstoffatomen, die verzweigt sein kann, eine substituierte oder nicht substituierte Alkylengruppe mit 1 bis 6 Kohlenstoffatomen, die eine Etherbindung enthält und verzweigt sein kann, eine substituierte oder nicht substituierte Perfluoralkylengruppe mit 1 bis 6 Kohlenstoffatomen, die eine Etherbindung enthält und verzweigt sein kann, oder eine substituierte oder nicht substituierte Fluoralkylengruppe mit 2 bis 6 Kohlenstoffatomen bezeichnet, die eine Etherbindung enthält und verzweigt sein kann; und A₂ eine substituierte oder nicht substituierte Alkylengruppe bezeichnet, die verzweigt sein kann; oder wobei die Verbindung von Formel (6) aus Verbindungen 6, 11, 14 und 21 gemäß Tabelle 1 ausgewählt ist; 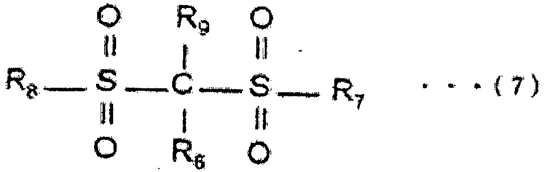 wobei in der Formel (7) R₆ und R₉ jeweils unabhängig ein Atom oder eine Gruppe bezeichnen, das (die) ausgewählt ist aus einem Wasserstoffatom, einer substituierten oder nicht substituierten Alkylgruppe mit 1 bis 5 Kohlenstoffatomen, einer substituierten oder nicht substituierten Alkoxygruppe mit 1 bis 5 Kohlenstoffatomen, einer substituierten oder nicht substituierten Fluoralkylgruppe mit 1 bis 5 Kohlenstoffatomen, einer Polyfluoralkylgruppe mit 1 bis 5 Kohlenstoffatomen, -SO₂X₃ (wobei X₃ eine substituierte oder nicht substituierte Alkylgruppe mit 1 bis 5 Kohlenstoffatomen ist), -SY₁ (wobei Y₁ eine substituierte oder nicht substituierte Alkylgruppe mit 1 bis 5 Kohlenstoffatomen ist), -COZ (wobei Z ein Wasserstoffatom oder eine substituierte oder nicht substituierte Alkylgruppe mit 1 bis 5 Kohlenstoffatomen ist) und einem Halogenatom; und R₇ und R₈ jeweils unabhängig ein Atom oder eine Gruppe bezeichnen, das (die) ausgewählt ist aus einer substituierten oder nicht substituierten Alkylgruppe mit 1 bis 5 Kohlenstoffatomen, einer substituierten oder nicht substituierten Alkoxygruppe mit 1 bis 5 Kohlenstoffatomen, einer substituierten oder nicht substituierten Phenoxygruppe, einer substituierten oder nicht substituierten Fluoralkylgruppe mit 1 bis 5 Kohlenstoffatomen, einer Polyfluoralkylgruppe mit 1 bis 5 Kohlenstoffatomen, einer substituierten oder nicht substituierten Fluoralkoxygruppe mit 1 bis 5 Kohlenstoffatomen, einer Polyfluoralkoxygruppe mit 1 bis 5 Kohlenstoffatomen, einer Hydroxylgruppe, einem Halogenatom, -NX₄X₅ (wobei X₄ und X₅ jeweils unabhängig ein Wasserstoffatom oder eine substituierte oder nicht substituierte Alkylgruppe mit 1 bis 5 Kohlenstoffatomen bezeichnen) und -NY₂CONY₃Y₄ (wobei Y₂ bis Y₄ jeweils unabhängig ein Wasserstoffatom oder eine substituierte oder nicht substituierte Alkylgruppe mit 1 bis 5 Kohlenstoffatomen sind).

2. Gelelektrolyt für eine Lithiumionen-Sekundärbatterie nach Anspruch 1, der ferner als Additiv eine Sultonverbindung in der Darstellung durch die folgende Formel (8) aufweist: 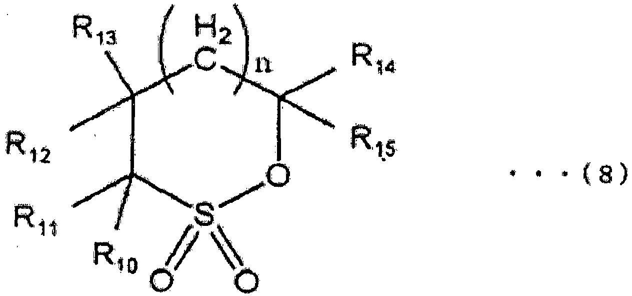 wobei in der Formel (8) R10 bis R15 jeweils unabhängig ein Atom oder eine Gruppe bezeichnen, das (die) ausgewählt ist aus einem Wasserstoffatom, einer Alkylgruppe mit mindestens 1 und höchstens 12 Kohlenstoffatomen, einer Cycloalkylgruppe mit mindestens 3 und höchstens 6 Kohlenstoffatomen und einer Arylgruppe mit mindestens 6 und höchstens 12 Kohlenstoffatomen; und n eine ganze Zahl von mindestens 0 und höchstens 2 bezeichnet.

3. Gelelektrolyt für eine Lithiumionen-Sekundärbatterie nach Anspruch 1 oder 2, der 0,05 bis 12 Masse-% mindestens einer Verbindung aufweist, die aus einem zyklischen Disulfonatester in der Darstellung durch die Formel (6), einem kettenförmigen Disulfonatester in der Darstellung durch die Formel (7) und einer Sultonverbindung in der Darstellung durch die Formel (8) ausgewählt ist.

4. Gelelektrolyt für eine Lithiumionen-Sekundärbatterie nach einem der Ansprüche 1 bis 3, der 3 bis 20 Masse-% einer Verbindung aufweist, die eine Phosphazenstruktur in der Darstellung durch die Formel (5) hat.

5. Lithiumionen-Sekundärbatterie mit einem Gelelektrolyt für eine Lithiumionen-Sekundärbatterie nach einem der Ansprüche 1 bis 4.

## Revendications

1. Electrolyte en gel pour pile secondaire à ions lithium, comprenant :
un sel de lithium ;
un copolymère d'un monomère représenté par la formule (1) ou (2) suivante et d'un monomère représenté par la formule (4) suivante ;
un composé ayant une structure phosphazène représenté par la formule (5) suivante ; et
en tant qu'additif, au moins un composé choisi parmi un ester disulfonate cyclique représenté par la formule (6) suivante, et un ester disulfonate à chaîne représenté par la formule (7) suivante : 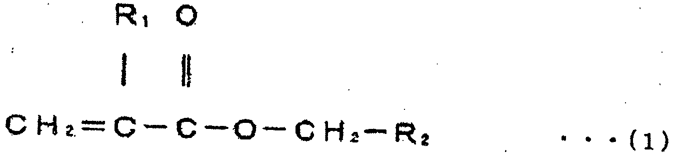 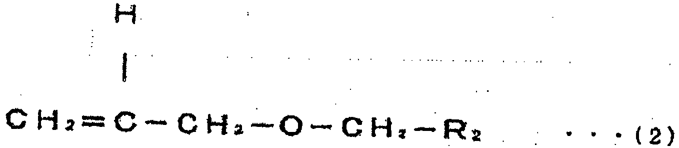 dans lequel, dans la formule (1), R₁ représente H ou CH₃ ; et dans les formules (1) et (2), R₂ représente l'un des substituants représentés par la formule (3) suivante ; 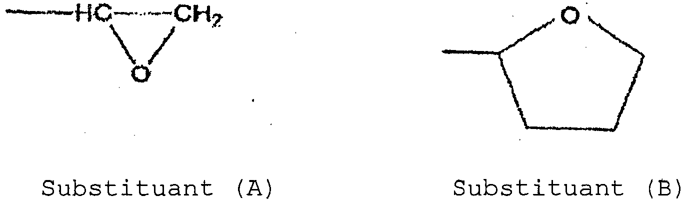 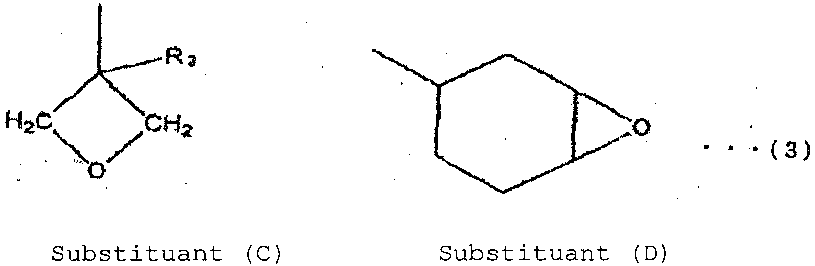 dans lequel, dans la formule (3), R₃ représente un groupe alkyle ayant 1 à 6 atomes de carbone ; 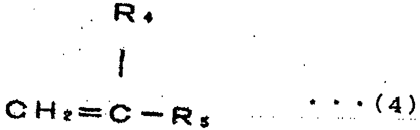 dans lequel, dans la formule (4), R₄ représente H ou CH₃ ; R₅ représente -COOCH₃, -COOC₂H₅, -COOC₃H₇, -COOC₄H₉, -COOCH₂CH(CH₃)₂, -COO(CH₂CH₂O)ₘCH₃, -COO(CH₂CH₂O)ₘC₄H₉, -COO(CH₂CH₂CH₂O)ₘCH₃, -COO(CH₂CH(CH₃)O)ₘCH₃, -COO(CH₂CH(CH₃)O)ₘC₂H₅, -OCOCH₃, -OCOC₂H₅ ou -CH₂OC₂H₅; et m représente un entier de 1 à 3 ; 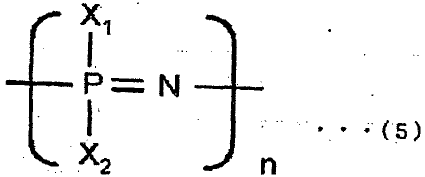 dans lequel, dans la formule (5), X₁ et X₂ représentent chacun indépendamment un élément halogène ou un substituant monovalent ; le substituant monovalent représente un groupe alkyle, un groupe alcoxy, un groupe aryle, un groupe acyle, un groupe aryloxy, un groupe amino, un groupe alkylthio, un groupe arylthio, un groupe alkyle halogéné, un groupe alcoxy halogéné, un groupe aryle halogéné, un groupe acyle halogéné, un groupe aryloxy halogéné, un groupe amino halogéné, un groupe alkylthio halogéné ou un groupe arylthio halogéné ; n représente un entier de 3 à 5 ; et la formule (5) peut être cyclique ; 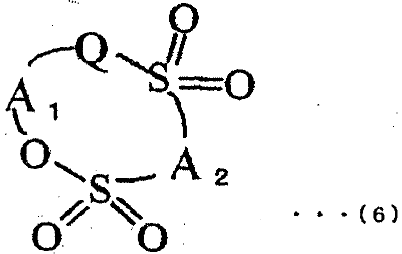 dans lequel, dans la formule (6) Q représente un atome d'oxygène, un groupe méthylène ou une liaison simple ; A₁ représente un groupe alkylène substitué ou non substitué ayant 1 à 5 atomes de carbone qui peut être ramifié, un groupe carbonyle, un groupe sulfinyle, un groupe perfluoroalkylène substitué ou non substitué ayant 1 à 5 atomes de carbone qui peut être ramifié, un groupe fluoroalkylène substitué ou non substitué ayant 2 à 6 atomes de carbone qui peut être ramifié, un groupe alkylène substitué ou non substitué ayant 1 à 6 atomes de carbone qui contient une liaison éther et peut être ramifié, un groupe perfluoroalkylène substitué ou non substitué ayant 1 à 6 atomes de carbone qui contient une liaison éther et peut être ramifié, ou un groupe fluoroalkylène substitué ou non substitué ayant 2 à 6 atomes de carbone qui contient une liaison éther et peut être ramifié ; et A₂ représente un groupe alkylène substitué ou non substitué qui peut être ramifié ; ou dans lequel le composé de formule (6) est choisi parmi les composés 6, 11, 14 et 21 présentés au Tableau 1 ; 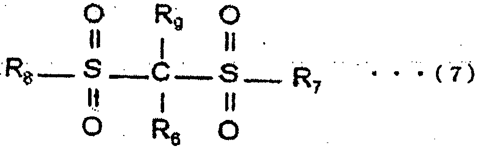 dans lequel, dans la formule (7), R₆ et R₉ chacun indépendamment représentent un atome ou un groupe choisi parmi un atome d'hydrogène, un groupe alkyle substitué ou non substitué ayant 1 à 5 atomes de carbone, un groupe alcoxy substitué ou non substitué ayant 1 à 5 atomes de carbone, un groupe fluoroalkyle substitué ou non substitué ayant 1 à 5 atomes de carbone, un groupe polyfluoroalkyle ayant 1 à 5 atomes de carbone, -SO₂X₃ (où X₃ est un groupe alkyle substitué ou non substitué ayant 1 à 5 atomes de carbone), -SY₁ (où Y₁ est un groupe alkyle substitué ou non substitué ayant 1 à 5 atomes de carbone), -COZ (où Z est un atome d'hydrogène ou un groupe alkyle substitué ou non substitué ayant 1 à 5 atomes de carbone) et un atome d'halogène ; et R₇ et R₈ chacun indépendamment représentent un atome ou un groupe choisi parmi un groupe alkyle substitué ou non substitué ayant 1 à 5 atomes de carbone, un groupe alcoxy substitué ou non substitué ayant 1 à 5 atomes de carbone, un groupe phénoxy substitué ou non substitué, un groupe fluoroalkyle substitué ou non substitué ayant 1 à 5 atomes de carbone, un groupe polyfluoroalkyle ayant 1 à 5 atomes de carbone, un groupe fluoroalcoxy substitué ou non substitué ayant 1 à 5 atomes de carbone, un groupe polyfluoroalcoxy ayant 1 à 5 atomes de carbone, un groupe hydroxyle, un atome d'halogène, -NX₄X₅ (où X₄ et X₅ sont chacun indépendamment un atome d'hydrogène ou un groupe alkyle substitué ou non substitué ayant 1 à 5 atomes de carbone) et -NY₂CONY₃Y₄ (où Y₂ à Y₄ sont chacun indépendamment un atome d'hydrogène ou un groupe alkyle substitué ou non substitué ayant 1 à 5 atomes de carbone).

2. Electrolyte en gel pour pile secondaire à ions lithium selon la revendication 1, comprenant en outre, en tant qu'additif, un composé sultone représenté par la formule (8) suivante : 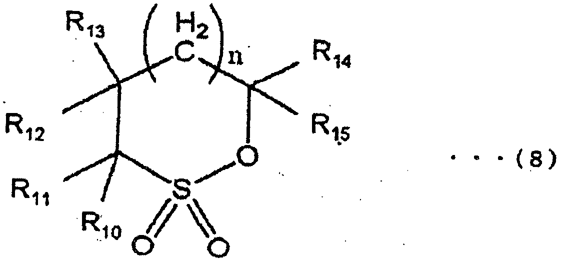 où, dans la formule (8) ; R₁₀ à R₁₅ chacun indépendamment représentent un atome ou un groupe choisi parmi un atome d'hydrogène, un groupe alkyle ayant 1 ou plus et 12 ou moins atomes de carbone, un groupe cycloalkyle ayant 3 ou plus et 6 ou moins atomes de carbone, et un groupe aryle ayant 6 ou plus et 12 ou moins atomes de carbone ; et n représente un entier de 0 ou plus et 2 ou moins.

3. Electrolyte en gel pour pile secondaire à ions lithium selon la revendication 1 ou 2, comprenant 0,05 à 12 % en masse d'au moins un composé choisi parmi un ester disulfonate cyclique représenté par la formule (6), un ester disulfonate à chaîne représenté par la formule (7) et un composé sultone représenté par la formule (8).

4. Electrolyte en gel pour pile secondaire à ions lithium selon l'une quelconque des revendications 1 à 3, comprenant 3 à 20 % en masse d'un composé ayant une structure phosphazène représenté par la formule (5).

5. Pile secondaire à ions lithium comprenant un électrolyte en gel pour une pile secondaire à ions lithium selon l'une quelconque des revendications 1 à 4.
